# NEUE EUROPÄISCHE PATENTSCHRIFT

(11) **EP 2 172 791 B2**
(45) Veröffentlichungstag und Bekanntmachung des Hinweises auf die Entscheidung über den Einspruch: **05.08.2020**
(45) Hinweis auf die Patenterteilung: 15.06.2011
(21) Anmeldenummer: 08105486.8
(22) Anmeldetag: 02.10.2008
(51) Int. Cl.: G01V 8/20

(54) **Lichtgitter**
Light grid
Barrière lumineuse

(43) Veröffentlichungstag der Anmeldung: 07.04.2010
(73) Patentinhaber: SICK AG, 79183 Waldkirch (DE)
(72) Erfinder: Wüstefeld, Martin, 79350, Sexau (DE)

(56) Entgegenhaltungen:
- EP-A- 1 031 469
- DE-A1- 10 055 689
- DE-B3-102007 038 421

## Beschreibung

Die Erfindung betrifft ein Lichtgitter, das auf dem Prinzip der Triangulation basiert, also eine Verletzung des Schutzfeldes des Lichtgitters nicht dadurch festgestellt wird, dass Lichtstrahlen unterbrochen sind, sondern dass mittels Triangulation die Entfernung zu einem Objekt und damit das Objekt selbst im Schutzfeld erkannt wird.

Solche Lichtgitter sollen eingesetzt werden, um im industriellen Umfeld Gefahrenbereiche, wie den Wirkbereich von Pressen, Stanzwerkzeugen, Robotern u. ä., abzusichern. Da von der Funktionstüchtigkeit der eingesetzten Lichtgitter somit Leben und Gesundheit von Bedienungspersonal abhängt, unterliegen derartige Sensoren strengen Normenvorschriften bezüglich einer geforderten Zuverlässigkeit gemäß den verschiedenen Nomen, wie beispielsweise EN/IEC 61496 "Sicherheit von Maschinen - Berührungslose Schutzeinrichtungen (BWS)" oder der europäischen Norm EN 61508 "Funktionale Sicherheit sicherheitsbezogener elektrischer, elektronischer, programmierbarer elektronischer Systeme". Die optoelektronischen Sensoren werden in Sicherheitskategorien unterteilt, die in der Norm EN 954 "Sicherheitsbezogene Teile von Steuerungen" oder deren Nachfolgenorm EN 13849 festgelegt sind.

Zur Absicherung eines Gefahrenbereichs kann ein solches Lichtgitter ein ebenes Schutzfeld, das von den Lichtstrahlen des Lichgitters aufgespannt wird, daraufhin überwachen, ob zulässige oder unzulässige Objekte das Schutzfeld verletzen. Bei Verletzung durch ein unzulässiges Objekt wird ein sicherheitsgerichtetes Schaltsignal ausgegeben, um die gefahrbringende Bewegung oder Maschine in einen gefahrlosen Zustand zu überführen, z. B. abzuschalten.

Aus der DE 100 55 689 A1 ist ein Triangulationslichtgitter bekannt, bei dem in einem Gehäuse Lichtsender in einer Reihe angeordnet sind und in der Mitte zwischen den Lichtsendern ein in Richtung der Senderreihe ortsauflösender Zeilenbildsensor angeordnet ist, mit dem Reflexionen der Sendelichtstrahlen an durch das Triangulationsprinzip festgelegten Orten auf dem Zeilenbildsensor abgebildet werden. Auf diese Weise lässt sich erkennen, ob sich Objekte im Schutzfeld des Lichtgitters, das sich beispielsweise zwischen dem Lichtgitter und einem Boden erstreckt, befinden. Ein derartiges Triangulationslichtgitter hat eine Reihe von Nachteilen.

Ein Nachteil ist, dass die einzelnen Basisabstände unterschiedlich sind, wodurch sich selbst innerhalb eines Lichtgitters für die verschiedenen Sendestrahlen unterschiedliche Entfernungsbereiche ergeben. Das ist für eine Anwendung völlig ungeeignet und dieses bekannte Triangulationslichtgitter kann nur dann sinnvoll eingesetzt sein, wenn sich die einzelnen Entfernungsbereiche der einzelnen Lichtstrahlen überlappen.

Ein weiterer Nachteil ist, dass aufgrund der in Richtung der Senderreihe verlaufenden Triangulationsrichtung sich Abschattungen innerhalb des Schutzfeldes durch das Objekt selbst ergeben können. Dadurch ergeben sich im Fall der Ausblendung von Schutzfeldbereichen, im sogenannten "Blanking"-Betriebsmodus, Lücken im Schutzfeld, die aufgrund ihrer Größe, Kontur und Lage sehr komplizierte Strukturen aufweisen und deshalb einem Anwender, der wissen muss, welche Bereiche des Schutzfeldes ungeschützt sind, nicht mehr vermittelt werden können.

Davon ausgehend ist es Aufgabe der Erfindung, ein verbessertes Lichtgitter bereitzustellen, das mit dem Triangulationsprinzip arbeitet, dabei aber die vorgenannten Nachteile vermeidet.

Diese Aufgabe wird gelöst durch ein Lichtgitter mit den Merkmalen des Anspruchs 1.

Das erfindungsgemäße Lichtgitter umfasst eine Reihe von ersten Lichtsendern, die jeweils einen kollimierten Sendelichtstrahl aussenden, die zusammen ein Schutzfeld definieren. Jedem Lichtsender ist ein in wenigstens eine Richtung ortsauflösender Lichtempfänger mit gleichem Basisabstand zugeordnet, so dass die Lichtempfänger dann wie die Lichtsender in einer Reihe angeordnet sind. Dabei ist die ortsauflösende Richtung, also die Triangulationsrichtung, quer zur Ausrichtung der Lichtsenderreihe und quer zum Schutzfeld ausgerichtet. Damit sind einzelne Triangulationstaster mit jeweils gleichen Basisabständen gebildet, deren Triangulationsrichtung jeweils parallel und quer zur Ausrichtung der Lichtsenderreihe und quer zum Schutzfeld verläuft.

Ein wesentlicher Vorteil des erfindungsgemäßen Lichtgitters besteht darin, dass im Gegensatz zu bekannten Triangulationslichtgittern über die Länge des Lichtgitters der gleiche Entfernungsmessbereich mit der gleichen Messgenauigkeit vorliegt, da alle Basisabstände gleich sind. Ebenso sind aufgrund der Triangulationsrichtung die nachteiligen Abschattungseffekte, die ein Blanking erschweren, vermieden.

Ein weiterer Vorteil ist, dass das erfindungsgemäße Lichtgitter einen hohen Manipulationsschutz aufweist. Dies gilt insbesondere dann, wenn die Sendelichtstrahlen auf eine Grenzfläche treffen, die eine Grenze des Schutzfeldes definiert. Im objektfreien Fall, also bei freiem Schutzfeld, sollten die Lichtempfänger immer die Grenzfläche "sehen", wodurch ein ständiger Funktionstest gegeben ist. Bei Vorsehen einer Grenzfläche ist deswegen eine hohe Manipulationssicherheit gegeben, da ein Verschieben von Sendergehäuse und/oder Empfängergehäuse oder ein Verschieben der Grenzflächen mit hoher Sicherheit von den Lichtempfängern erkannt würde. Eine Grenzfläche ermöglicht auch eine schnelle sicherheitstechnische Konzeptfreigabe.

Die Lichtsender sind in einem Sendergehäuse angeordnet und die Lichtempfänger in einem separaten Empfängergehäuse, wobei Sender- und Empfängergehäuse parallel zueinander angeordnet sind, so dass deren Abstand den gemeinsamen Basisabstand definiert. Damit sind quasi einzelne Triangulationtaster mit jeweils gleichen Basisabständen gebildet und der gemeinsame Basisabstand wird durch den Abstand von Sende- zu Empfängergehäuse definiert.

Nach dem Stand der Technik sind die Basisabstände zwischen den einzelnen Lichtsendern und dem Empfänger fest vorgegeben, wodurch das Lichtgitter nur für einen begrenzten Entfernungsbereich ausgebildet sein kann. Lichtgitter werden jedoch in einem großen Entfernungsbereich (von einigen 10 cm bis zu mehreren 10 m) eingesetzt, so dass eine Vielzahl von unterschiedlich konstruierten Lichtgittern mit entsprechenden Basisabständen zur Verfügung stehen müssen. Nach der Erfindung in dieser Ausgestaltung mit getrennten Gehäusen ergibt sich der Vorteil, dass der Basisabstand anpassbar ist, in dem Sender- und Empfängergehäuse entsprechend zueinander positioniert werden. Dadurch ist der Entfernungsmessbereich und die erforderliche Messgenauigkeit optimal an die Applikation anpassbar. Für alle Anwendungen ist aber immer das gleiche Lichtgitter mit den gleichen Sendergehäusen und Empfängergehäusen einsetzbar, so dass keine unterschiedlichen Varianten auf Lager gehalten werden müssen.

In Weiterbildung der Erfindung kann ein Lichtempfänger als Zeilenbildsensor mit jeweils in einer Reihe angeordneter Empfangselemente ausgebildet sein oder auch als PSD-Element (position-sensitive-device). Derartige Lichtempfänger sind relativ einfach und kostengünstig. Allerdings müssten in diesem Fall die Lichtsender auf die jeweiligen Lichtempfänger korrekt ausgerichtet sein, damit die einzeiligen Lichtempfänger auch jeweils getroffen werden. Eine solche Justage kann erheblich vereinfacht werden, wenn die Lichtempfänger zweidimensional als 4-Quadranten-Elemente oder als n x m Matrix von Empfangselementen ausgebildet sind. Dann kann nämlich die Justage elektronisch erfolgen, indem der Lichtempfänger erkennt, wo im objektfreien Fall ein Reflex von der Grenzfläche auf den Lichtempfänger abgebildet wird.

Zur Vereinfachung der visuellen Justage von Sende- zu Empfängergehäuse kann vorteilhafterweise auch ein Ausrichtlichtsender vorgesehen sein.

Um den Basisabstand einstellen zu können, sind das Sendergehäuse und das Empfängergehäuse einzeln montierbar. Dies bedeutet gleichzeitig auch einen Manipulationsschutz, denn irgendeine Manipulation, sei es am Sendergehäuse, am Empfängergehäuse oder an der gegenüberliegenden Grenzfläche, wird sich in der Regel immer auf das Triangulationsverhältnis auswirken, was erkannt werden würde. Die Montage kann mit Hilfe einer Schablone, die den Basisabstand vorgibt, erfolgen.

Bevorzugt ist das Lichtgitter an einer Fördereinrichtung angeordnet, wobei die Förderrichtung quer zur Senderreihe bzw. Empfängerreihe liegt. Dabei kann die Fördereinrichtung die Grenzfläche selbst bilden, wenn beispielsweise das Lichtgitter von oben auf ein Förderband oder auf eine Seitenwand der Fördereinrichtung gerichtet ist.

In vorteilhafter Weiterbildung der Erfindung ist die Empfängerreihe in Förderrichtung hinter der Senderreihe angeordnet, wodurch sich eine freie Sicht der Empfänger auf das gesamte Schutzfeld ergibt, auch wenn zu detektierende Objekte in Förderrichtung in das Schutzfeld hinein befördert werden. Ein sogenanntes Blanking oder Muting des Lichtgitters, also ein teilweises (Blanking) oder vollständiges (Muting) Abschalten der Schutzfunktion des Lichtgitters zum Durchlassen zulässiger Objekte, wird durch die freie Sicht des Empfängers auf das durch die Sendestrahlen definierte Schutzfeld nicht behindert.

Zur Bildung eines Warnfeldes vor dem Schutzfeld kann vorteilhafterweise eine zweite Reihe zweiter Lichtsender in einer zweiten Senderreihe, bevorzugt in einem zweiten Sendergehäuse vorgesehen sein, wobei jedem der Empfänger jeweils ein erster Lichtsender des Schutzfeldes und ein zweiter Lichtsender des Warnfeldes zugeordnet sind. Ein Warnfeld vor dem eigentlichen Schutzfeld kann beispielsweise sinnvoll sein, um eine Warnung auszugeben, wenn sich ein Objekt dem Schutzfeld nähert, um beispielsweise ungewollte Unterbrechungen des Arbeitsablaufes rechtzeitig zu verhindern. Auch können mit einem Warnfeld vor dem eigentlichen Schutzfeld Tiefeninformationen eines zulässigen Objektes bestimmt werden, um die Objekte für das Muting zu klassifizieren.

Die Empfänger müssen dann beide Felder auswerten, was entweder Zeit multiplex geschehen kann, oder alternativ könnten das Warnfeld und das Schutzfeld auch gleichzeitig ausgewertet werden, wenn die Empfänger beispielsweise als Matrix-Empfänger ausgebildet sind.

Zur visuellen Unterscheidung des Warnfeldes von dem Schutzfeld können die ersten Lichtsender des Schutzfeldes Licht einer ersten Wellenlänge aussenden und die zweiten Lichtsender des Warnfeldes Licht einer zweiten Wellenlänge, wobei es sinnvoll ist, dass das Licht des Schutzfeldes sichtbares, beispielsweise rotes Licht ist und das Licht des Warnfeldes nicht sichtbares, infrarotes Licht.

Im Folgenden wird die Erfindung anhand eines Ausführungsbeispiels unter Bezugnahme auf die Zeichnung im Einzelnen erläutert. In der Zeichnung zeigen:
- Fig. 1: eine schematische Darstellung des erfindungsgemäßen Lichtgitters in einer Applikation;
- Fig. 2: eine detailliertere schematische Darstellung eines Ausschnittes aus Fig. 1 zur Verdeutlichung des Messprinzips;
- Fig. 3: die Darstellung aus Fig. 1 in der Draufsicht;
- Fig. 4: eine Ansicht wie Fig. 2 einer weiteren Ausführungsform.

In den Figuren ist die Erfindung nur schematisch dargestellt, so dass die Perspektiven und Maßstäbe nicht exakt sind und nicht konsistent sein müssen. In den einzelnen Figuren sind gleiche Teile mit gleichen Bezugsziffern gekennzeichnet.

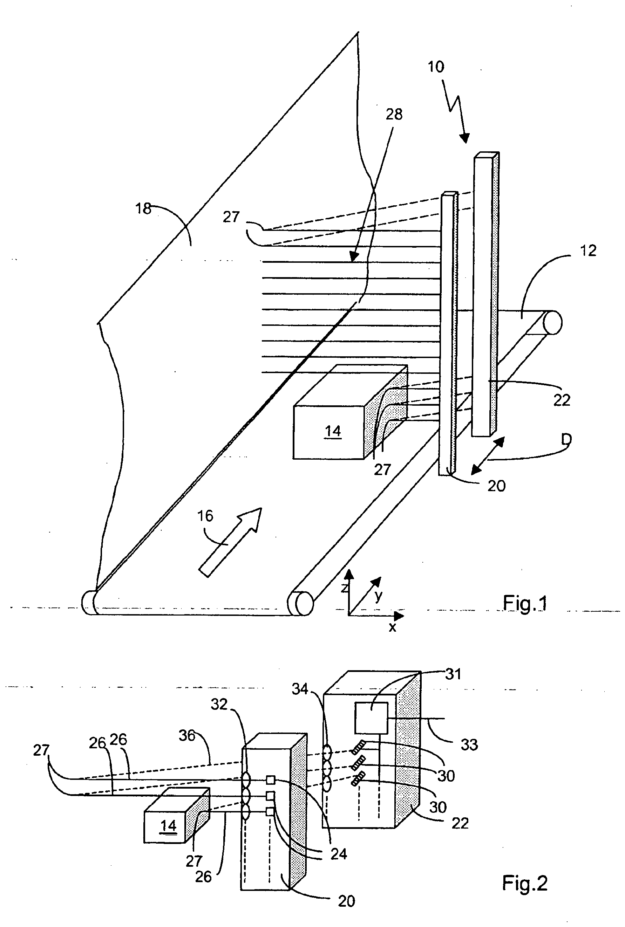

In Fig. 1 ist ein erfindungsgemäßes Lichtgitter 10 in einer beispielhaften Applikation dargestellt zur Verdeutlichung des Funktionsprinzips. Das Lichtgitter 10 ist an einer Fördereinrichtung 12 angeordnet, die zulässige Objekte 14 in Förderrichtung 16 (y-Richtung) transportiert. Das Lichtgitter 10 dient dabei als Sicherheitslichtgitter zur Zugangsabsicherung eines am Ende der Fördereinrichtung 12 befindlichen Bereiches, beispielsweise eines Gefahrenbereiches. Das Lichtgitter 10 ist dabei seitlich im Bereich der Fördereinrichtung 12 angeordnet. Auf der anderen Seite der Fördereinrichtung 12, dem Lichtgitter 10 gegenüber, befindet sich eine Grenzfläche 18, so dass der abzusichernde Zugangsbereich sich zwischen dem Lichtgitter 10 und der Grenzfläche 18 befindet.

Das erfindungsgemäße Lichtgitter 10 weist in der dargestellten Ausführungsform ein Sendergehäuse 20 und ein Empfängergehäuse 22 auf. Wie auch aus Fig. 2 zu erkennen ist, ist in dem Sendergehäuse 20 eine Reihe von ersten Lichtsendern 24 angeordnet, wobei jeder Lichtsender 24 über eine zugehörige Sendeoptik 32 kollimierte Sendelichtstrahlen 26 quer zur Förderrichtung 16, also parallel zur x-Richtung, aussendet. Die Sendelichtstrahlen 26 definieren ein den Zugangsbereich absicherndes Schutzfeld 28. In dem Empfängergehäuse 22 ist eine Reihe von Lichtempfängern 30 angeordnet, die in wenigstens eine Richtung ortsauflösend ausgebildet sind, wobei diese Richtung quer zur Ausrichtung der Lichtsenderreihe und quer zum Schutzfeld 28, also im Wesentlichen in y-Richtung, gelegen ist.

Jeder der Lichtempfänger 30 ist einem Lichtsender 24 zugeordnet. Über eine Empfangsoptik 34 wird ein Lichtreflex 27 eines zugehörigen Sendelichtstrahls auf dem jeweiligen Lichtempfänger 30 abgebildet. Die Lichtsender 24 mit ihrer Sendeoptik 32 und die Lichtempfänger 30 mit ihrer Empfangsoptik 34 sind dabei in einer Triangulations-Anordnung angeordnet, so dass jeder der Lichtempfänger 30 zusammen mit dem zugeordneten Lichtsender 24 einen gleichartigen Triangulationslichttaster bildet. Da das Sendergehäuse 20 parallel zum Empfängergehäuse 22 angeordnet ist, sind die Basisabstände der Triangulationslichttaster alle gleich und durch den Abstand D definiert.

Die Funktionsweise, insbesondere der Triangulationslichttaster, ist in der schematischen Fig. 2 erkennbar. Die Lichtreflexe 27 der beiden oberen Sendelichtstrahlen 26, die von der weit entfernten Grenzfläche 18 stammen, werden auf das eine Ende der zugehörigen Empfänger 30 abgebildet und der nicht so weit entfernte Reflex 27 des unteren Lichtstrahls 26, der von dem Objekt 14 reflektiert wird, wird auf dem anderen Ende des zugehörigen Empfängers 30 abgebildet. Der Abstand D ist so gewählt, dass er an die Applikation angepasst ist und der gesamte Zugangsbereich, also das gesamte Schutzfeld, von den Empfängern 30 einsehbar ist und die Ausdehnung der Lichtempfänger 30 in y-Richtung optimal ausgenutzt wird.

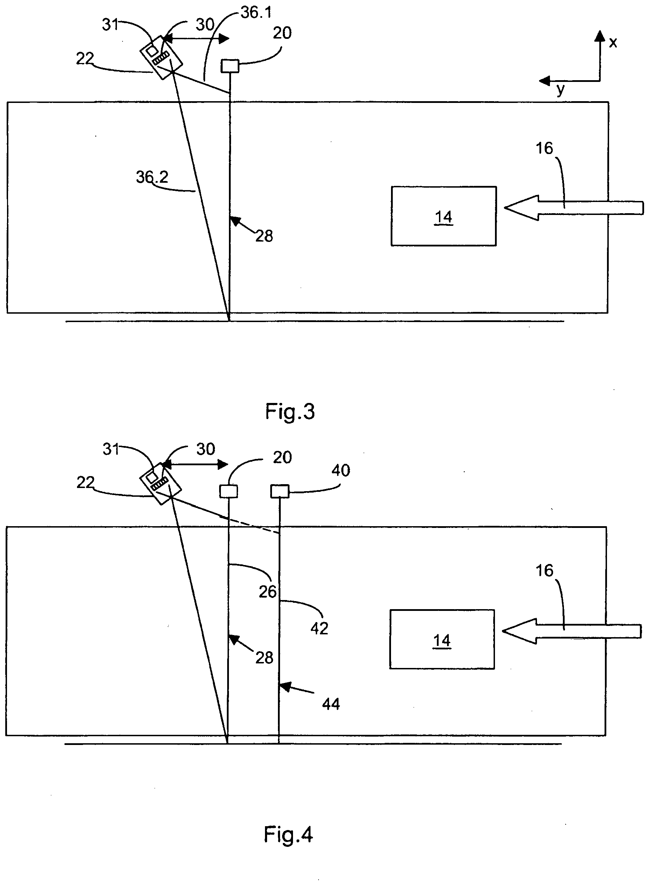

Die Triangulationsanordnung ist noch besser in Fig. 3 zu erkennen, die eine Draufsicht auf die Anordnung aus Fig. 1 zeigt. Dort ist anhand der Randstrahlen 36.1 und 36.2 schematisch der Sichtbereich eines Lichtempfängers 30 dargestellt. Der Abstand D sollte also derart gewählt werden, dass ein Empfänger 30 die gesamte Schutzfeldbreite erfasst.

Das Empfängergehäuse 22 ist dabei in Förderrichtung 16 hinter dem Sendergehäuse 20 angeordnet, so dass die Empfänger 30 immer freie Sicht auf das Schutzfeld 28 haben, wenn Objekte 14 in das Schutzfeld 28 hinein gefördert werden.

Ein Lichtempfänger 30 kann beispielsweise als Zeilensensor mit jeweils einzelnen in einer Reihe angeordneter Empfangselemente ausgebildet sein. Alternativ kann der Lichtempfänger auch als PSD-Elemente ausgebildet sein. Bevorzugt ist der Lichtempfänger 30 ein zweidimensionaler Bildsensor, bestehend beispielsweise aus 4-Quadranten-Elementen oder alternativ aus einer n x m Matrix von Empfangselementen.

Damit das Empfängergehäuse 22 mit den Lichtempfängern 30 korrekt auf das einzusehende Schutzfeld 28 ausgerichtet werden kann, ist in einer Ausführungsform ein Ausrichtlichtsender vorgesehen, so dass eine optische Justage erfolgen kann. Zur Montage von Sendergehäuse 20 und Empfängergehäuse 22 und damit einhergehender Justierung des den Basisabstand definierenden Abstandes D sind die Gehäuse vorzugsweise über Montageschablonen einzeln montierbar.

In der beispielhaften Applikation, die in den Fig. 1 bis 3 schematisch dargestellt ist, funktioniert das erfindungsgemäße Sicherheitslichtgitter wie folgt: Werden Objekte in Förderrichtung durch das Schutzfeld 28 gefördert, so kann das Lichtgitter 10 mittels einer Auswerteeinheit 31 nicht nur eine Verletzung des Schutzfeldes registrieren, sondern auch den Abstand eines Lichtreflexes 27 zum Lichtgitter mittels Triangulation bestimmen. Dies erfolgt, wie bei Lichtgittern üblich, indem die Lichtsender 24 einzeln nacheinander aber jeweils zusammen mit dem zugehörigen Lichtempfänger 30 in wiederkehrendem Zyklus aktiviert werden. Wenn nicht alle Lichtreflexe 27 den Abstand Lichtgitter-Grenzfläche aufweisen, befindet sich ein Objekt im Schutzfeld 28. Im einfachsten Fall, wenn kein Objekt zugelassen werden darf, könnte ein sicherheitsgerichtetes Schaltsignal 33 ausgegeben werden. In der Regel soll aber eine Materialzuführung möglich sein, so dass die Schutzfunktion des Lichtgitters 10 für die Zeit der Zuführung stumm geschaltet werden soll (Muting), um die Materialzuführung zu erlauben. Zulässige Objekte, beispielsweise Objekt 14, könnten anhand der Kontur, also anhand der durch das erfindungsgemäße Lichtgitter 10 bestimmten Entfernungswerte der einzelnen Lichtreflexe 27, klassifiziert werden, woraufhin ein Muting erfolgt oder das Sicherheitsschaltsignal 33 ausgegeben wird.

In Fig. 4 ist eine weitere Ausführungsform der Erfindung dargestellt, bei der zusätzlich zum ersten Sendergehäuse 20 ein weiteres, zweites Sendergehäuse 40 vorgesehen ist. In dem zweiten Sendergehäuse 40 ist eine zweite Reihe zweiter Lichtsender angeordnet, deren Lichtstrahlen 42 parallel zu den Sendelichtstrahlen 26 verlaufen. Die Lichtstrahlen 42 definieren ein Warnfeld 44, das in Förderrichtung 16 vor dem Schutzfeld 28 und parallel zu diesem angeordnet ist. Dabei ist jedem Lichtempfänger 30 sowohl jeweils ein erster Lichtsender 24 des Schutzfeldes 28 als auch jeweils ein zweiter Lichtsender des Warnfeldes 44 zugeordnet. Zur Auswertung des Schutzfeldes 28 und des Warnfeldes 44 durch den gemeinsamen Empfänger 30 und die Auswerteeinheit müssen Warnfeld 28 und Schutzfeld 44 zusammen mit den Empfängern 30 entweder zeitmultiplex betrieben werden oder die Empfänger als Matrix-Empfänger ausgebildet sein, so dass Reflexe der Schutzfeldlichtstrahlen und der Warnfeldlichtstrahlen gleichzeitig auf den Empfängern 30 an verschiedenen Orten abgebildet werden können und somit unterschieden werden können.

## Patentansprüche

1. Lichtgitter mit einer Reihe von ersten Lichtsendern (24), die jeweils einen kollimierten Sendelichtstrahl (26) aussenden und die Sendelichtstrahlen (26) zusammen ein Schutzfeld (28) definieren und jedem Lichtsender (24) ein in wenigstens eine Richtung ortsauflösender Lichtempfänger (30) mit gleichem Basisabstand (D) zugeordnet ist und die Lichtempfänger (30) dann wie die Lichtsender (24) in einer Reihe angeordnet sind, **dadurch gekennzeichnet, dass** die ortsauflösende Richtung, die Triangulationsrichtung, quer zur Ausrichtung der Lichtsenderreihe und quer zum Schutzfeld (28) ausgerichtet ist, zur Bildung von Triangulationstastern mit jeweils gleichen Basisabständen (D) und jeweils parallelen, quer zur Ausrichtung der Lichtsenderreihe und quer zum Schutz-feld verlaufender Triangulationsrichtung und. dass die Lichtsender (24) in einem Sendergehäuse (20) angeordnet sind und die Lichtempfänger (30) in einem Empfängergehäuse (22) angeordnet sind, wobei Sender- und Empfängergehäuse (20 und 22) parallel zueinander angeordnet sind, so dass deren Abstand (D) den gemeinsamen Basisabstand definiert.

2. Lichtgitter nach einem der vorhergehenden Ansprüche, **dadurch gekennzeichnet, dass** die Sendelichtstrahlen (26) auf eine Grenzfläche (18) treffen, die eine Grenze des Schutzfeldes (28) definiert.

3. Lichtgitter nach einem der vorhergehenden Ansprüche, **gekennzeichnet durch** eine Auswerteeinheit (31) zur Bestimmung einer Entfernung eines Objektes (14) vom Lichtgitter (10).

4. Lichtgitter nach Anspruch 34, **dadurch gekennzeichnet, dass** die Auswerteeinheit (31) zur Abgabe eines sicherheitsgerichteten Schaltsignals (33) ausgelegt ist.

5. Lichtgitter nach einem der vorhergehenden Ansprüche, **dadurch gekennzeichnet, dass** ein Lichtempfänger (30) jeweils in einer Reihe angeordnete Empfangselemente aufweist oder als PSD-Element ausgebildet ist.

6. Lichtgitter nach einem der vorhergehenden Ansprüche, **dadurch gekennzeichnet, dass** ein Lichtempfänger als 4-Quadranten-Elemente ausgebildet ist oder jeweils eine n x m -Matrix von Empfangselementen aufweist.

7. Lichtgitter nach einem der vorhergehenden Ansprüche, **dadurch gekennzeichnet, dass** in dem Empfängergehäuse ein Ausrichtlichtsender vorgesehen ist.

8. Lichtgitter nach einem der vorhergehenden Ansprüche, **dadurch gekennzeichnet, dass** das Sendergehäuse (20) und das Empfängergehäuse (22) zur Einstellung des Basisabstandes einzeln montierbar sind.

9. Lichtgitter nach einem der vorhergehenden Ansprüche, **dadurch gekennzeichnet, dass** das Lichtgitter (10) an einer Fördereinrichtung (12) angeordnet ist, wobei die Förderrichtung (16) quer zur Senderreihe bzw. Empfängerreihe liegt und die Fördereinrichtung (12) die Grenzfläche (18) umfasst.

10. Lichtgitter nach Anspruch 9, **dadurch gekennzeichnet, dass** die Empfänger-reihe in Förderrichtung (16) hinter der Senderreihe angeordnet ist.

11. Lichtgitter nach einem der vorhergehenden Ansprüche, **dadurch gekennzeichnet, dass** eine zweite Reihe zweiter Lichtsender, vorzugsweise in einem zweiten Sendergehäuse (40) vorgesehen ist und das Licht der zweiten Lichtsenderreihe ein Warnfeld (44) definiert, wobei jedem Empfänger (30) jeweils ein erster Lichtsender des Schutzfeldes (28) und ein zweiter Lichtsender des Warnfeldes (44) zugeordnet sind.

12. Lichtgitter nach Anspruch 11, **dadurch gekennzeichnet, dass** das Warnfeld (44) und das Schutzfeld (28) zeitmultiplex von den Empfängern (30) und der Auswerteeinheit (31) ausgewertet werden.

13. Lichtgitter nach Anspruch 11 in Verbindung mit Anspruch 34, **dadurch gekennzeichnet, dass** das Warnfeld (44) und das Schutzfeld (28) gleichzeitig ausgewertet werden.

14. Lichtgitter nach Anspruch 112, **dadurch gekennzeichnet, dass** die ersten Lichtsender, nämlich die des Schutzfeldes, mit Licht einer ersten Wellenlänge aussenden und die zweiten Lichtsender, nämlich die des Warnfeldes, Licht einer zweiten Wellenlänge.

## Claims

1. A light grid having a row of first light transmitters (24) which each transmit a collimated transmitted light beam (26) and the transmitted light beams (26) together define a protected field (28) and a light receiver (30) spatially resolving in at least one direction and with the same base spacing (D) is associated with each light transmitter (24) and the light receivers (30) are then, like the light transmitters (24), arranged in a row, **characterised in that** the spatially resolving direction, the triangulation direction, is aligned transversely to the alignment of the light transmitter row and transversely to the protected field (28) for the formation of triangulation sensors each having the same base spacing (D) and each having a parallel triangulation direction extending transversely to the alignment of the light transmitter row and transversely to the protected field and **in that** the light transmitters (24) are arranged in a transmitter housing (20) and the light receivers (30) are arranged in a receiver housing (22), wherein the transmitter housing and the receiver housing (20 and 22) are arranged parallel to one another so that their spacing (D) defines the common base spacing.

2. A light grid in accordance with any one of the preceding claims, **characterised in that** the transmitted light beams (26) are incident onto a boundary surface (18) which defines a boundary of the protected field (28).

3. A light grid in accordance with any one of the preceding claims, **characterised by** an evaluation unit (31) for determining a distance of an object (14) from the light grid (10).

4. A light grid in accordance with claim 3, **characterized in that** the evaluation unit (31) is designed for outputting a safety-directed switching signal (33).

5. A light grid in accordance with any one of the preceding claims, **characterised in that** a light receiver (30) has reception elements respectively arranged in a row or is formed as a PSD element.

6. A light grid in accordance with any one of the preceding claims, **characterised in that** a light receiver is made as 4-quadrant elements or has a respective n x m matrix of reception elements.

7. A light grid in accordance with any one of the preceding claims, **characterised in that** an alignment light transmitter is provided in the receiver housing.

8. A light grid in accordance with any one of the preceding claims, **characterised in that** the transmitter housing (20) and the receiver housing (22) can be installed individually for adjusting the base spacing.

9. A light grid in accordance with any one of the preceding claims, **characterised in that** the light grid (10) is arranged at a conveying device (12), with the conveying direction (16) lying transverse to the transmitter row or receiver row and the conveying device (12) including the boundary surface (16).

10. A light grid in accordance with claim 9, **characterised in that** the receiver row is arranged behind the transmitter row in the conveying direction (16).

11. A light grid in accordance with any one of the preceding claims, **characterised in that** a second row of second light transmitters is preferably provided in a second transmitter housing (40) and the light of the second light transmitter row defines a warning field (44), with a respective first light transmitter of the protected field (28) and a second light transmitter of the warning field (44) being associated with each receiver (30).

12. A light grid in accordance with claim 11, **characterised in that** the warning field (44) and the protected field (28) are evaluated in time multiplex by the receivers (30) and the evaluation unit (31).

13. A light grid in accordance with claim 11 in connection with claim 3, **characterised in that** the warning field (44) and the protected field (28) are evaluated simultaneously.

14. A light grid in accordance with claim 11, **characterised in that** the first light transmitters, namely those of the protected field, transmit light of a first wavelength and the second light transmitters, namely those of the warning field, transmit light of a second wavelength.

## Revendications

1. Barrière lumineuse avec une rangée de premiers émetteurs de lumière (24), qui émettent chacun un faisceau de lumière émise collimatée (26), et les faisceaux de lumière émise (26) définissent ensemble un champ de protection (28), et à chaque émetteur de lumière (24) est associé un récepteur de lumière (30) à résolution locale dans au moins une direction, avec le même écartement de base (D), les récepteurs de lumière (30) étant alors agencés dans une rangée comme les émetteurs de lumière (24),
**caractérisée en ce que** la direction de résolution locale, la direction de triangulation, est orientée transversalement à l'orientation de la rangée d'émetteurs de lumière et transversalement au champ de protection (28), pour former des palpeurs de triangulation avec des écartements de base respectivement égaux (D), et une direction de triangulation respectivement parallèle, s'étendant transversalement à l'orientation de la rangée d'émetteurs de lumière et transversalement au champ de protection et **en ce que** les émetteurs de lumière (24) sont agencés dans un boîtier d'émetteurs (20) et les récepteurs de lumière (30) sont agencés dans un boîtier de récepteurs (22), le boîtier d'émetteurs et le boîtier de récepteurs (20 et 22) étant agencés parallèlement l'un à l'autre, de sorte que leur distance (D) définit l'écartement de base commun.

2. Barrière lumineuse selon l'une des revendications précédentes, **caractérisée en ce que** les faisceaux de lumière émise (26) tombent sur une surface limite (18) qui définit une limite du champ de protection (28).

3. Barrière lumineuse selon l'une des revendications précédentes, **caractérisée par** une unité d'évaluation (31) pour déterminer un éloignement d'un objet (14) depuis la barrière lumineuse (10).

4. Barrière lumineuse selon la revendication 3, **caractérisée en ce que** l'unité d'évaluation (31) est conçue pour délivrer un signal de commutation (33) à vocation de sécurité.

5. Barrière lumineuse selon l'une des revendications précédentes, **caractérisée en ce qu'**un récepteur de lumière (30) comprend des éléments récepteurs agencés respectivement dans une rangée, ou **en ce qu'**il est réalisé comme un élément PSD.

6. Barrière lumineuse selon l'une des revendications précédentes, **caractérisée en ce qu'**un récepteur de lumière est réalisé sous forme d'élément à quatre quadrants, ou comprend respectivement une matrice n x m d'éléments récepteurs.

7. Barrière lumineuse selon l'une des revendications précédentes, **caractérisée en ce qu'**un émetteur à lumière d'orientation est prévu dans le boîtier de récepteurs.

8. Barrière lumineuse selon l'une des revendications précédentes, **caractérisée en ce que** le boîtier d'émetteurs (20) et le boîtier de récepteurs (22) peuvent être montés individuellement pour le réglage de l'écartement de base.

9. Barrière lumineuse selon l'une des revendications précédentes, **caractérisée en ce que** la barrière lumineuse (10) est agencée sur un système de convoyage (12), telle que la direction de convoyage (16) est perpendiculaire à la rangée d'émetteurs ou à la rangée de récepteurs, et le système de convoyage (12) inclut la surface limite (18).

10. Barrière lumineuse selon la revendication 9, **caractérisée en ce que** la rangée de récepteurs est agencée derrière la rangée d'émetteurs en direction de convoyage (16).

11. Barrière lumineuse selon l'une des revendications précédentes, **caractérisée en ce qu'**il est prévu une seconde rangée de seconds émetteurs de lumière, de préférence dans un second boîtier d'émetteurs (40), et la lumière de la seconde rangée d'émetteurs de lumière définit un champ d'avertissement (44), de sorte qu'à chaque récepteur (30) est associé respectivement un premier émetteur de lumière du champ de protection (28) et un second émetteur de lumière du champ d'avertissement (44).

12. Barrière lumineuse selon la revendication 11, **caractérisée en ce que** le champ d'avertissement (44) et le champ de protection (28) sont évalués de façon multiplexée dans le temps par les récepteurs (30) et par l'unité d'évaluation (31).

13. Barrière lumineuse selon la revendication 11 en association avec la revendication 3, **caractérisée en ce que** le champ d'avertissement (44) et le champ de protection (28) sont évalués simultanément.

14. Barrière lumineuse selon la revendication 11, **caractérisée en ce que** les premiers émetteurs de lumière, à savoir ceux du champ de protection, émettent une lumière avec une première longueur d'onde et les seconds émetteurs de lumière, à savoir ceux du champ d'avertissement, émettent une lumière avec une seconde longueur d'onde.
